# EUROPÄISCHE PATENTSCHRIFT

(11) **EP 3 366 505 B1**
(45) Veröffentlichungstag und Bekanntmachung des Hinweises auf die Patenterteilung: **10.04.2019**
(21) Anmeldenummer: 18157891.5
(22) Anmeldetag: 21.02.2018
(51) Int. Cl.: B60K 35/00, G07C 5/12, G07C 5/08, B60R 16/02

(54) **VERFAHREN UND SYSTEM ZUR ABFAHRTSKONTROLLE EINES KRAFTFAHRZEUGS**
METHOD AND SYSTEM FOR CONTROLLING THE DRIVE OFF OF A MOTOR VEHICLE
PROCÉDÉ ET SYSTÈME DE CONTRÔLE DE SORTIE D'UN VÉHICULE À MOTEUR

(30) Priorität: 25.02.2017 DE 102017001850
(43) Veröffentlichungstag der Anmeldung: 29.08.2018
(73) Patentinhaber: MAN Truck & Bus AG, 80995 München (DE)
(72) Erfinder: Baumann, Manuel, 85551 Kirchheim (DE); Mohra, Holger, 80805 München (DE); Arnold, Claus, 93161 Sinzing (DE); Zademach, Martin, 85232 Bergkirchen (DE); Güllich, Johannes, 85229 Markt Indersdorf (DE); Wölfel, Christiane, 81539 München (DE); Pongratz, Michael, 85414 Kirchdorf (DE)
(74) Vertreter: v. Bezold & Partner Patentanwälte - PartG mbB

(56) Entgegenhaltungen:
- EP-A1- 2 889 259
- EP-A2- 1 195 723
- DE-A1- 10 246 012
- DE-A1-102015 011 466
- JP-A- 2007 064 761

## Beschreibung

Die Erfindung betrifft ein Verfahren und ein System zur Abfahrtskontrolle eines Kraftfahrzeugs, insbesondere eines Nutzfahrzeugs.

Die Offenlegungsschrift DE 10 2015 011 466 A1 offenbart ein Verfahren und ein System zur Abfahrtskontrolle eines Kraftfahrzeugs, wobei eine Kontrollliste mit zu kontrollierenden Kraftfahrzeugfunktionen abgearbeitet wird. Aus der Praxis ist jedoch bekannt, dass bestimmte Kraftfahrzeugfunktionen und Betriebsparameter bei Abfahrt nicht im Sinne einer Check-Liste abgearbeitet werden müssen, sondern lediglich zur Information des Fahrers angezeigt werden. Ein Beispiel für einen derartigen Betriebsparameter ist beispielsweise der Vorratsdruck eines Druckluftsystems eines Nutzfahrzeugs, insbesondere zur Versorgung einer Druckluftbremse. Der Fahrer des Nutzfahrzeugs muss vor jeder Fahrt sicherstellen, ob der Vorratsdruck einen Wert erreicht hat, mit dem er die Fahrt beginnen kann. Weitere Betriebsparameter, die insbesondere bei Fahrtantritt geprüft werden, sind die Kühlmitteltemperatur und eine Öltemperatur.

Aus der Praxis sind Lastkraftwagen (LKWs) bekannt, bei denen insbesondere die Anzeige des Vorratsdrucks und der Kühlmittel- und Öltemperatur meist zeitlich unbegrenzt und anhand von analogen Rundinstrumenten im Kombiinstrument oder in neueren Fahrzeugmodellen mittels digitaler Anzeigen innerhalb einer Menüstruktur angezeigt wird.

Der Fahrer des LKWs muss zwar vor jeder Fahrt sicherstellen, ob der Vorratsdruck ein Level erreicht hat, mit dem eine ausreichende Bremsfunktion sichergestellt werden kann, damit der Fahrer die Fahrt beginnen kann. Die Vorratsdruckanzeige wird während der Fahrt jedoch nicht dauerhaft benötigt, sondern nur bis zur Abfahrt, sobald der Sollvorratsdruck erreicht ist oder bei einem Defekt. Auch die Temperatur des Kühlmittels und des Öls ist während der Fahrt nur bei Problemen oder in den ersten Kilometern nach Abfahrt relevant, um einen ökonomischen bzw. verschleißarmen Fahrstil einhalten zu können. Üblicherweise soll ein voller Leistungsabruf des Antriebsmotors erst nach Erreichen der Kühlmittel- und Ölsolltemperatur erfolgen. Zudem muss der Fahrer vor Abfahrt in speziellen Fällen weitere fahrzeugspezifische Faktoren beachten, wie z. B. Kühlung der Fracht oder Sicherheitsbestimmungen bestimmter Materialien.

Die aus dem Stand der Technik bekannten Ansätze haben daher den Nachteil, dass ein großer Platzbedarf der Anzeige von Vorratsdruck, Kühlmitteltemperatur und Öltemperatur bei Darstellung als permanent angezeigtes analoges oder virtuelles Rundinstrument im Kombiinstrument eines LKWs vonnöten ist, obwohl die Anzeige von Vorratsdruck und Kühlmitteltemperatur und Öltemperatur während der Fahrt im Normalfall nicht dauerhaft nötig ist. Dabei sind die Anzeigevorrichtungen bzw. Bildschirme in Fahrzeugen oftmals durch bauliche Gegebenheiten in ihrer Größe beschränkt. Gleichzeitig nimmt die Anzahl der potentiell abrufbaren Funktionen oder Informationen, die an das Bediensystem gekoppelt sind, sukzessive zu.

Aus der Praxis sind ferner Ansätze bekannt, bei denen der Vorratsdruck vor Beginn der Fahrt über Menüstrukturen zwar angezeigt werden kann, aber manuell abgerufen werden muss, was dazu führt, dass der Fahrer keinen Hinweis darauf bekommt, wann er die Fahrt beginnen kann, wenn er nicht danach sucht.

Es ist somit eine Aufgabe der Erfindung, ein verbessertes Verfahren und System zur Abfahrtskontrolle eines Kraftfahrzeugs, insbesondere eines Nutzfahrzeugs, bereitzustellen, mit denen Nachteile aus dem Stand der Technik vermieden werden können. Es ist insbesondere eine Aufgabe der Erfindung, dem Fahrer bei Abfahrt bedarfsgerecht und mit einer platzsparenden Gestaltung der Fahrzeuganzeige, insbesondere eines Kombiinstruments, wichtige Betriebsinformationen zum Fahrzeug bereitzustellen.

Diese Aufgaben werden durch Verfahren und Systeme mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Abfahrtskontrolle eines Kraftfahrzeugs bereitgestellt, insbesondere ein Verfahren zur Anzeige von Betriebsparametern, die beim Abfahren besonders relevant sind. Das Kraftfahrzeug kann ein Nutzfahrzeug sein, beispielsweise ein LKW oder ein Omnibus. Das Verfahren umfasst das Einblenden einer Abfahrtskontrollanzeige auf einer Anzeigefläche einer Anzeigevorrichtung. Die Anzeigevorrichtung ist vorzugsweise ein Kombiinstrument und die Anzeigefläche ein Bildschirm (auch als Display bezeichnet), z. B. ein TFT-Display, des Kombiinstruments. Das Kombiinstrument ist vorzugsweise als digitales (virtuelles) Cockpit bzw. als frei programmierbares Kombiinstrument (FPK) ausgeführt.

Die Abfahrtskontrollanzeige wird vor Abfahrt des Kraftfahrzeugs angezeigt. Hierbei umfasst die Abfahrtskontrollanzeige eine Zustandsanzeige eines Vorratsdrucks eines Druckluftkreises des Kraftfahrzeugs, eine Zustandsanzeige einer Öltemperatur und eine Zustandsanzeige einer Kühlmitteltemperatur des Kraftfahrzeugs. Der übliche Begriff "Öltemperatur" soll hier auch allgemein als "Schmiermitteltemperatur" verstanden werden, da zur Motorschmierung allgemein Schmiermittel eingesetzt werden, die jedoch üblicherweise mit dem Begriff "Öl" bezeichnet werden. Unter einer Abfahrt wird ein Losfahren des Kraftfahrzeugs verstanden, insbesondere nach einem Kaltstart.

Das Verfahren umfasst ferner das Ausblenden der Zustandsanzeige des Vorratsdrucks innerhalb der Abfahrtskontrollanzeige, nachdem der Vorratsdruck einen Vorratsdruck-Sollwert und/oder Vorratsdruck-Sollwertbereich erreicht hat. Der Vorratsdruck-Sollwert entspricht einem vorgegebenen Mindestvorratsdruck, der bei Fahrzeugstart aufgebaut werden muss, damit z. B. ein sicherer Betrieb der Druckluftbremsen gewährleistet ist. Mit anderen Worten wird, nachdem der Vorratsdruck den Vorratsdruck-Sollwert erreicht hat, die Abfahrtskontrollanzeige angepasst, derart, dass der Zustand des Vorratsdrucks in dieser nicht mehr angezeigt wird.

Das Verfahren umfasst ferner das Ausblenden der Abfahrtskontrollanzeige nach Abfahrt des Kraftfahrzeugs, wenn zumindest die Öltemperatur einen Öltemperatur-Sollwert und die Kühlmitteltemperatur einen Kühlmitteltemperatur-Sollwert überschritten hat und/oder wenn die Öltemperatur einen Öltemperatur-Sollwertbereich und die Kühlmitteltemperatur einen Kühlmitteltemperatur-Sollwertbereich erreicht hat.

Anhand der automatisch vor Abfahrt eingeblendeten Vorratsdruckanzeige wird der Fahrer informiert, ob bzw. wann ein ausreichender Vorratsdruck im Druckluftsystem aufgebaut ist, damit er die Fahrt beginnen kann. Die Anzeige der Temperatur des Kühlmittels und des Öl auch noch kurz nach der Abfahrt gibt dem Fahrer einen Hinweis, wie lange er warten sollte, bevor er eine volle Leistung der Brennkraftmaschine abruft, um eine verbrauchsoptimierte und verschleißarme Fahrweise zu unterstützen. Dem Fahrer werden somit die bei Abfahrt relevanten Kontrollinformationen, insbesondere in Bezug auf den Vorratsdruck sowie die Kühlmitteltemperatur und die Öltemperatur zur richtigen Zeit angezeigt - ohne dass er diese Informationen manuell abrufen muss. Der Fahrer erhält dadurch Unterstützung bei der Auswahl relevanter Informationen vor und während der Fahrt. Dabei verschwinden diese Informationen wieder, sobald sie nicht mehr benötigt werden. Diese situative Anpassung der Anzeigen bietet ferner den Vorteil, dass die Anzeige dieser Informationen keinen unnötigen Platz in der Instrumentenanzeige beansprucht, wenn diese im normalen Fahrbetrieb nicht benötigt werden. Dies ermöglicht eine platzsparende Gestaltung des Kombiinstruments.

Gemäß einer besonders bevorzugten Ausführungsform zeigt die Zustandsanzeige des Vorratsdrucks des Druckluftkreises den Vorratsdruck-Sollwert und einen aktuellen Wert des Vorratsdrucks an. Dies bietet den Vorteil, dass der Fahrer vor der Abfahrt anhand der Vorratsdruckanzeige einschätzen kann, wie lange er noch warten muss, bis er die Fahrt starten kann. Ferner kann die Zustandsanzeige der Öltemperatur den Öltemperatur-Sollwert und einen aktuellen Wert der Öltemperatur anzeigen. Ferner kann die Zustandsanzeige der Kühlmitteltemperatur den Kühlmitteltemperatur-Sollwert und einen aktuellen Wert der Kühlmitteltemperatur anzeigen. Dies bietet den Vorteil, dass der Fahrer nach der Abfahrt abschätzen kann, wie lange es dauert, bis die aktuellen Werte der Öl- bzw. Kühlmitteltemperatur ihre Sollwerte erreicht haben und der Fahrer einen vollen Leistungsabruf beim LKW anfordern kann.

Die jeweiligen Sollwerte und aktuellen Werte können hierbei in der Abfahrtskontrollanzeige alphanumerisch, d. h. als Zahlenwert, und/oder grafisch anzeigt werden. Ein Beispiel für die grafische Anzeige kann die Darstellung als Balkenanzeige oder als Rundinstrument sein. Der Begriff "Rundinstrument" umfasst auch eine Darstellung als Halbrundinstrument, z. B. in Form eines Teilkreises, oder allgemein gekrümmte Skalen in Kombination mit einem Zeiger, der auf den aktuellen Wert des jeweiligen Betriebsparameters, hier des Vorratsdrucks, der Öltemperatur oder der Schmiermitteltemperatur zeigt. Die vorgenannten Sollwerte können die unteren Grenzen eines für den jeweiligen Betriebsparameter für den Fahrbetrieb vorgegeben Sollwertbereichs sein.

Ferner besteht die Möglichkeit, dass ein Ausblenden der Zustandsanzeige der Öltemperatur innerhalb der Abfahrtskontrollanzeige erfolgt, insbesondere nach Abfahrt des Kraftfahrzeugs, nachdem die Öltemperatur den Öltemperatur-Sollwert erreicht hat. Entsprechend besteht die Möglichkeit, dass ein Ausblenden der Zustandsanzeige der Kühlmitteltemperatur innerhalb der Abfahrtskontrollanzeige erfolgt, insbesondere nach Abfahrt des Kraftfahrzeugs, nachdem die Kühlmitteltemperatur den Kühlmitteltemperatur-Sollwert erreicht hat. Gemäß dieser Variante verschwinden diese Zustandsanzeigen nach dem Erreichen der jeweiligen Solltemperatur und geben Platz für andere während der Fahrt relevante Informationen frei. Es erfolgt somit ein zeitlich gestaffeltes Schließen der jeweiligen Zustandsanzeige innerhalb der Abfahrtskontrollanzeige, so dass nur noch diejenigen abfahrtsrelevanten Betriebsparameter angezeigt werden, die noch vom Fahrer kontrolliert oder zur Kenntnis genommen werden sollten, z. B. weil sie ihren Sollwert und/oder Sollwertbereich noch nicht erreicht haben.

Die Abfahrtskontrollanzeige kann als Informationsfenster dargestellt sein, das die Zustandsanzeige der vorgenannten Betriebsparameter enthält. Für eine möglichst kompakte Abfahrtskontrollanzeige ist es vorteilhaft, wenn diese und/oder das Informationsfenster eine Zustandsanzeige lediglich des Vorratsdrucks, der Öltemperatur und der Kühlmitteltemperatur des Kraftfahrzeugs umfasst.

Es besteht jedoch auch die Möglichkeit, dass neben Vorratsdruck, Kühlmitteltemperatur und Öltemperatur weitere insbesondere fahrzeugspezifische Informationen in diese Anzeige integriert werden können, die vor Abfahrt oder bei Antritt der Fahrt im LKW benötigt werden. Denkbar ist hier beispielsweise der Kühlzustand der Fracht bei Kühlfahrzeugen. Ein weitere Möglichkeit der erfindungsgemäßen Realisierung sieht vor, dass die Abfahrtskontrollanzeige durch einen Nutzer vorab personalisierbar ist, derart, dass eine Auswahl und Anzeigedauer von Betriebsparameter festlegbar snd, die von der Abfahrtskontrollanzeige angezeigt werden.

Die Abfahrtskontrollanzeige und/oder das entsprechende Informationsfenster können andere Anzeigenelemente des Kombiinstruments, insbesondere virtuelle Rundinstrumente zur Geschwindigkeits- und/oder Drehzahlanzeige, zumindest zum Teil überblenden und/oder vor Abfahrt des Kraftfahrzeugs vollständig verdecken. Ferner kann die Abfahrtskontrollanzeige und/oder das entsprechende Informationsfenster nach der erfolgten Ausblendung der Zustandsanzeige des Vorratsdrucks und/oder nach Abfahrt des Kraftfahrzeugs und vor dem Ausblenden der Abfahrtskontrollanzeige verkleinert dargestellt werden. Auf diese Weise kann die Abfahrtskontrollanzeige großflächig und für den Fahrer leicht wahrnehmbar dargestellt werden. Da die Abfahrtskontrollanzeige nach der Abfahrt ausgeblendet und vorzugsweise verkleinert dargestellt wird, hat der Fahrer nach Abfahrt dennoch gute Sicht auf die für den Fahrbetrieb relevanten Anzeigeinstrumente.

Gemäß einem weiteren Aspekt kann ein Hinweissignal und/oder eine Benachrichtigung ausgegeben werden, falls ein und/oder alle in der Abfahrtskontrollanzeige angezeigten Betriebsparameter ihren zugeordneten Sollwert erreichen. Dies erleichtert die Überwachung und Kontrolle der für die Abfahrt relevanten Betriebsparameter durch den Fahrer.

Der Zeitpunkt zur Anzeige und/oder das Einblenden der Abfahrtskontrollanzeige kann so gewählt werden, dass die Abfahrtskontrollanzeige vor Abfahrt des Kraftfahrzeugs beim Motorstart (Zündung) und vorzugsweise nach einem erfolgten Einstieg des Fahrers ins Kraftfahrzeug erfolgt. Wird geprüft, ob ein Einstieg des Fahrers ins Kraftfahrzeug, insbesondere ins Fahrerhaus bei einem LKW, erfolgt ist, kann vermieden werden, dass eine Abfahrtskontrollanzeige auch bei einem Warmstart, z. B. bei einem Stopp-Start-Betrieb, des Kraftfahrzeugs erfolgt.

Gemäß einem zweiten Gesichtspunkt der Erfindung wird ein System zur Abfahrtskontrolle eines Kraftfahrzeugs, insbesondere eines Nutzfahrzeugs, bereitgestellt. Das System umfasst eine Anzeigevorrichtung mit einer Anzeigefläche und ferner eine Sensorvorrichtung, die in an sich bekannter Weise ausgeführt sei kann, einen Zustand zumindest eines Vorratsdrucks eines Druckluftkreises, einer Öltemperatur und einer Kühlmitteltemperatur des Kraftfahrzeugs zur erfassen. Das System umfasst ferner eine Steuervorrichtung, die an die Anzeigevorrichtung und die Sensorvorrichtung angekoppelt ist und mit der eine wiedergebende Anzeige auf der Anzeigefläche steuerbar ist. Hierbei ist die Steuervorrichtung ausgeführt, die Anzeigevorrichtung derart anzusteuern, dass auf der Anzeigefläche eine Abfahrtskontrollanzeige vor Abfahrt des Kraftfahrzeugs eingeblendet wird, wie vorstehend bereits für das Verfahren beschrieben wurde.

Zur Vermeidung von Wiederholungen sollen rein verfahrensgemäß offenbarte Merkmale auch als vorrichtungsgemäß offenbart und beanspruchbar sein und umgekehrt. Die Steuervorrichtung ist insbesondere ausgeführt, ein Verfahren zur Abfahrtskontrolle eines Kraftfahrzeugs wie in diesem Dokument offenbart auszuführen, um eine Abfahrtskontrollanzeige auf der Anzeigefläche der Anzeigevorrichtung anzuzeigen. Vorstehend wurde bereits erwähnt, dass die Anzeigevorrichtung ein Kombiinstrument und die Anzeigefläche ein Bildschirm (Display) sein kann.

Die Erfindung betrifft ferner ein Nutzfahrzeug, umfassend ein System zur Abfahrtskontrolle wie in diesem Dokument offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Systems zur Abfahrtskontrolle gemäß einem ersten Ausführungsbeispiel;
- Figur 2: ein Ablaufdiagramm zur beispielhaften Illustration eines Verfahrens zur Abfahrtskontrolle gemäß einem Ausführungsbeispiel der Erfindung;
- Figur 3: die Anzeigevorrichtung des Systems aus Figur 1 in einem Zustand kurz nach Abfahrt;
- Figur 4: die Anzeigevorrichtung des Systems aus Figur 1 in einem Zustand, nachdem die Abfahrtskontrollanzeige ausgeblendet wurde; und
- Figur 5: die Anzeigevorrichtung des Systems aus Figur 1 in einem Zustand kurz vor dem Ausblenden der Abfahrtskontrollanzeige.

Gleiche oder funktional äquivalente Elemente sind in allen Figuren mit denselben Bezugszeichen bezeichnet und werden zum Teil nicht gesondert beschrieben.

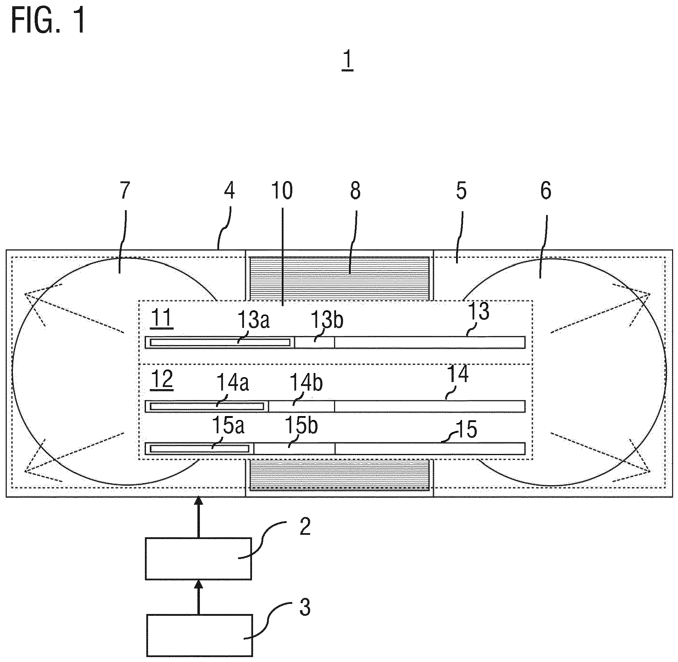

Figur 1 zeigt eine schematische Darstellung eines Systems zur Abfahrtskontrolle eines Nutzfahrzeugs gemäß einem Ausführungsbeispiel. Das Nutzahrzeug umfasst ein Druckluftsystem, insbesondere zur Versorgung eines Druckluftbremssystems. Das System 1 zur Abfahrtskontrolle umfasst eine Anzeigevorrichtung 4 mit einer Anzeigefläche 5. Die Anzeigevorrichtung ist ein sog. Kombiinstrument, und die Anzeigefläche 5 ist ein Bildschirm des Kombiinstruments. Das System 1 umfasst ferner eine Sensorvorrichtung 3, die ausgeführt ist, einen Zustand zumindest eines Vorratsdrucks eines Druckluftkreises, einer Öltemperatur und einer Kühlmitteltemperatur des Kraftfahrzeugs zu erfassen. Derartige Sensorvorrichtungen sind bekannt und umfassen entsprechende Druck- und Temperatursensoren. Das System 1 umfasst ferner eine Steuervorrichtung 2, die an die Anzeigevorrichtung 4 und die Sensorvorrichtung 3 angekoppelt ist und mit der eine wiedergebende Anzeige auf der Anzeigefläche 5 steuerbar ist.

Lediglich beispielhaft können auf der Anzeigefläche 2 virtuelle (digitale) Rundinstrumente 6, 7, beispielsweise zur Darstellung eines virtuellen (d. h. nicht analogen) Tachometers 7 und eines virtuellen Drehzahlmessers 6, verwendet werden. Zwischen den beiden virtuellen Rundinstrumenten 6, 7 ist ein weiterer Anzeigeabschnitt bzw. Teilbereich 8 des zentrale Anzeigebildschirms 5 vorgesehen, der eine zentrale Fahrzeuganzeige ausbildet, um z. B. aktuelle Informationen von Fahrerassistenzsystemen und/oder der Fahrzeugumgebung anzuzeigen.

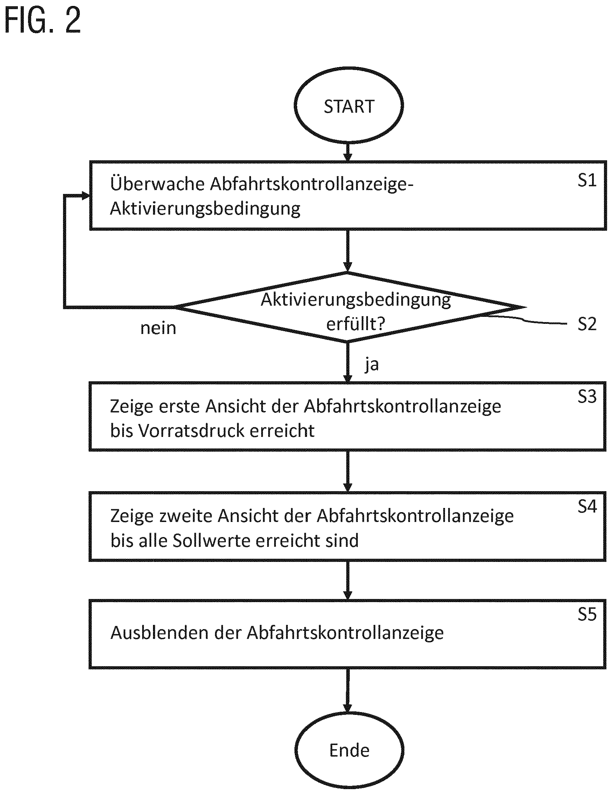

Figur 2 zeigt ein Ablaufdiagramm zur beispielhaften Illustration eines Verfahrens zur Abfahrtskontrolle gemäß einem Ausführungsbeispiel der Erfindung. Zur Illustration des Verfahrens wird ferner auf die Figuren 1, 3, 4 und 5 Bezug genommen.

Die erfindungsgemäße Abfahrtskontrollanzeige soll dem Fahrer vor Abfahrt, d. h. bevor sich das Fahrzeug in Bewegung setzt, die für den Losfahrvorgang relevanten Informationen anzeigen. Dementsprechend wird eine Abfahrtskontrollanzeige-Aktivierungsbedingung gewählt, die dann erfüllt ist, wenn eine Abfahrt unmittelbar bevorsteht. In Schritt S1 wird diese Abfahrtskontrollanzeige-Aktivierungsbedingung überwacht und in Schritt S2 geprüft, ob diese erfüllt ist. Lediglich beispielhaft ist die Abfahrtskontrollanzeige-Aktivierungsbedingung erfüllt, wenn der Fahrer in das Fahrzeug gestiegen ist und den Motor startet. Selbstverständlich sind weitere Varianten oder andere Erkennungsansätze denkbar, solange hieraus zuverlässig abgeleitet werden kann, dass eine Abfahrt des Kraftfahrzeugs bevorsteht oder zumindest wahrscheinlich ist. In der Steuervorrichtung 2 kann daher auch eine entsprechende Erkennungslogik implementiert sein, die z. B. das Auftreten eines Zündvorgangs überwacht und z. B. das Einsteigen des Fahrers anhand eines Tür- oder Sitzsensors feststellen kann.

Ist die Abfahrtskontrollanzeige-Aktivierungsbedingung erfüllt, wird gemäß Schritt S3 auf dem Bildschirm 5 eine erste Ansicht der Abfahrtskontrollanzeige 10 dargestellt, die beispielhaft in Figur 1 dargestellt ist. Die Steuervorrichtung 2 steuert das Kombiinstrument 4 dann so an, dass auf der Anzeigefläche 5 (dem Bildschirm) eine Abfahrtskontrollanzeige 10 eingeblendet wird. Gemäß dem gezeigten Ausführungsbeispiel zeigt die Abfahrtskontrollanzeige 10 eine Zustandsanzeige 13 eines Vorratsdrucks eines Druckluftkreises, eine Zustandsanzeige 14 einer Öltemperatur und eine Zustandsanzeige 15 einer Kühlmitteltemperatur des Kraftfahrzeugs an. Die Zustandsanzeigen sind jeweils als Balkenanzeigen ausgeführt. Die Zustandsanzeige 13 des Vorratsdrucks zeigt den aktuellen Wert 13a des Vorratsdrucks und den Sollbereich 13b des Vorratsdrucks an. Der Sollbereich 13b weist einen Mindestwert und einen Maximalwert, jeweils gekennzeichnet durch vertikale Striche, auf. Die Balkenanzeige kann ferner eine Skala und/oder deine alphanumerische Angabe der jeweiligen Werte enthalten (nicht dargestellt). Erst wenn der Mindestwert des Sollbereichs 13b erreicht ist, kann der Fahrer losfahren. Davor blockiert die Fahrzeugsteuerung das Losfahren.

Die Vorratsdruckanzeige 13 informiert den Fahrer somit, wie weit der aktuelle Vorratsdruck noch vom Mindestwert des Sollbereichs 13b entfernt ist, so dass der Fahrer abschätzen kann, wann er vorrausichtlich losfahren kann.

Entsprechend zeigt die Zustandsanzeige 14 der Öltemperatur eine aktuelle Öltemperatur 14a und einen Öltemperatursollbereich 14b und die Zustandsanzeige 15 der Kühlmitteltemperatur eine aktuelle Kühlmitteltemperatur 15a und einen Kühlmitteltemperatursollbereich 15b an. Die Abfahrtskontrollanzeige 10 ist als Informationsfenster ausgeführt, das alle Zustandsanzeigen 13, 14, 15 beinhaltet.

Wie in Figur 1 ferner ersichtlich ist, werden andere Anzeigenelemente 7, 8, 9 zum Teil von der Abfahrtskontrollanzeige 10 überblendet, so dass die Abfahrtskontrollanzeige 10 großflächig auf dem Bildschirm 5 sichtbar ist. Die gepunkteten Pfeile deuten an, dass gemäß einer alternativen Variante die Abfahrtskontrollanzeige 10 vor Abfahrt des Fahrzeugs den Bildschirm 5 auch vollständig verdecken bzw. den Bildschirm 5 vollständig einnehmen kann.

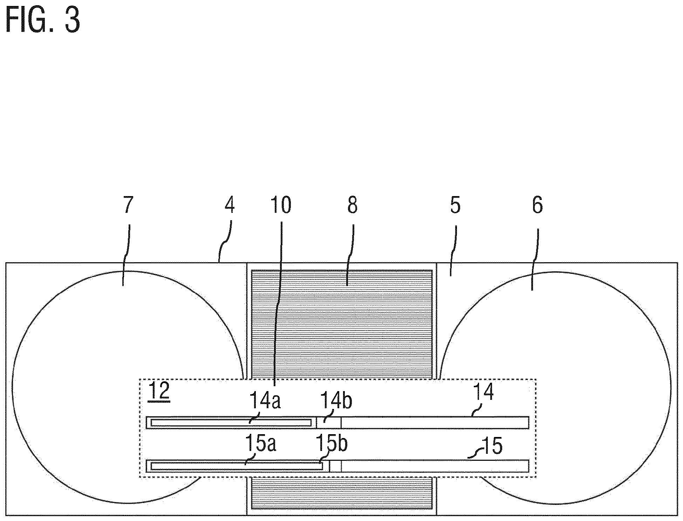

Die Abfahrtskontrollanzeige 10 gemäß der gezeigten Ausführungsvariante umfasst zwei Anzeigenbestandteile, gekennzeichnet durch die Bezugszeichen 11, 12 und die gestrichelte Trennlinie dazwischen. Vor der Abfahrt des Fahrzeugs werden beide Anzeigebestandteile 11, 12 angezeigt, nach dem Erreichen des Vorratsdruck-Sollwerts wird nur noch der Anzeigenbestandteil 12 angezeigt. Insbesondere wird, falls der Vorratsdruck 13a soweit angestiegen ist, dass er den Sollbereich 13b erreicht hat, eine zweite Ansicht der Abfahrtskontrollanzeige 10 dargestellt (Schritt S4), die nur noch den Anzeigenbestandteil 12 aufweist, was in Figur 3 dargestellt ist. Hierbei erfolgt innerhalb des Informationsfensters der Abfahrtskontrollanzeige 10 ein Ausblenden der Zustandsanzeige 13 des Vorratsdrucks, nachdem der Vorratsdruck einen Vorratsdruck-Sollwert erreicht hat, so dass nur noch die Zustandsanzeigen 14, 15 der Öltemperatur und der Kühlmitteltemperatur angezeigt werden.

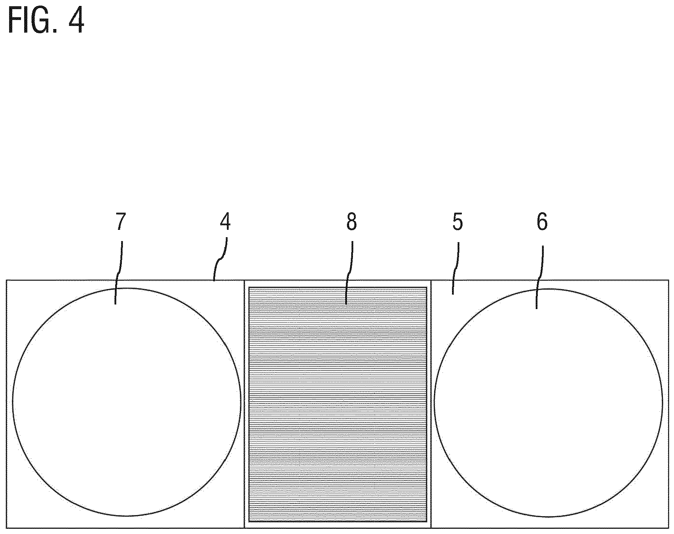

Erst wenn die Öltemperatur einen Öltemperatur-Sollwertbereich und die Kühlmitteltemperatur einen Kühlmitteltemperatur-Sollwertbereich erreicht haben, wird gemäß Schritt S5 die Abfahrtskontrollanzeige 10 vollständig ausgeblendet (nicht mehr angezeigt), so dass die "normale" Ansicht des Kombiinstrumenten-Bildschirms für den Fahrbetrieb angezeigt wird, was in Figur 4 dargestellt ist.

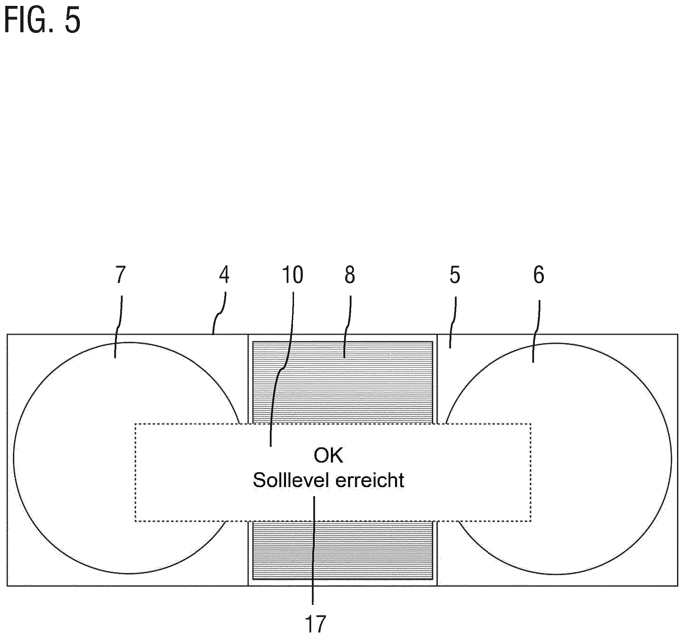

Um den Fahrer auf das Beenden der Abfahrtskontrollanzeige 10 hinzuweisen, kann vor dem Ausblenden noch ein Hinweissignal und/oder eine Benachrichtigung 17 ausgegeben werden, was in Figur 5 beispielhaft dargestellt ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: System zur Abfahrtskontrolle
- 2: Steuervorrichtung
- 3: Sensorvorrichtung
- 4: Anzeigevorrichtung, z. B. Kombiinstrument
- 5: Anzeigefläche, z. B. Bildschirm
- 6: Rundinstrument, z. B. virtueller Drehzahlmesser
- 7: Rundinstrument, z. B. virtueller Tachometer
- 8: Zentrale Fahrzeuganzeige
- 10: Abfahrtkontrollanzeige
- 11: Erster Anzeigebestandteil der Abfahrtskontrollanzeige
- 12: Zweiter Anzeigebestandteil der Abfahrtskontrollanzeige
- 13: Zustandsanzeige des Vorratsdrucks
- 13a: Aktueller Wert des Vorratsdrucks
- 13b: Vorratsdrucksollwertbereich
- 14: Zustandsanzeige der Öltemperatur
- 14a: Aktueller Wert der Öltemperatur
- 14b: Öltemperatursollwertbereich
- 15: Zustandsanzeige der Kühlmitteltemperatur
- 15a: Aktueller Wert der Kühlmitteltemperatur
- 15b: Kühlmitteltemperatursollwertbereich
- 17: Hinweismeldung

## Patentansprüche

1. Verfahren zur Abfahrtskontrolle eines Kraftfahrzeugs, insbesondere eines Nutzfahrzeugs, umfassend die Schritte:
Einblenden einer Abfahrtskontrollanzeige (10) auf einem Bildschirm (5) eines Kombiinstruments (4) des Kraftfahrzeugs vor Abfahrt des Kraftfahrzeugs, wobei die Abfahrtskontrollanzeige (10) eine Zustandsanzeige (13, 14, 15) eines Vorratsdrucks eines Druckluftkreises, einer Öltemperatur und einer Kühlmitteltemperatur des Kraftfahrzeugs umfasst;
Ausblenden der Zustandsanzeige (13) des Vorratsdrucks, nachdem der Vorratsdruck einen Vorratsdruck-Sollwert erreicht hat; und
Ausblenden der Abfahrtskontrollanzeige (10) nach Abfahrt des Kraftfahrzeugs, wenn zumindest die Öltemperatur einen Öltemperatur-Sollwert und die Kühlmitteltemperatur einen Kühlmitteltemperatur-Sollwert überschritten hat.

2. Verfahren nach Anspruch 1, **gekennzeichnet durch**
a) ein Ausblenden der Zustandsanzeige (14) der Öltemperatur innerhalb der Abfahrtskontrollanzeige (10), insbesondere nach Abfahrt des Kraftfahrzeugs, nachdem die Öltemperatur den Öltemperatur-Sollwert erreicht hat; und
b) ein Ausblenden der Zustandsanzeige (15) der Kühlmitteltemperatur innerhalb der Abfahrtskontrollanzeige (10), insbesondere nach Abfahrt des Kraftfahrzeugs, nachdem die Kühlmitteltemperatur den Kühlmitteltemperatur-Sollwert erreicht hat.

3. Verfahren nach Anspruch 1 oder 2, **dadurch gekennzeichnet, dass** die Zustandsanzeige (13, 14, 15) zumindest des Vorratsdrucks, der Öltemperatur und der Kühlmitteltemperatur des Kraftfahrzeugs den Vorratsdruck-Sollwert (13b), den Öltemperatur-Sollwert (14b) und den Kühlmitteltemperatur-Sollwert (15b) und jeweils einen aktuellen Wert (13a, 14a, 15a) des Vorratsdrucks, der Öltemperatur und der Kühlmitteltemperatur alphanumerisch und/oder grafisch anzeigt.

4. Verfahren nach einem der vorhergehenden Ansprüche, **dadurch gekennzeichnet, dass** die Abfahrtskontrollanzeige (10) als Informationsfenster dargestellt ist.

5. Verfahren nach Anspruch 4, **dadurch gekennzeichnet, dass** das Informationsfenster (10) eine Zustandsanzeige (13, 14, 15) lediglich des Vorratsdrucks, der Öltemperatur und der Kühlmitteltemperatur des Kraftfahrzeugs umfasst.

6. Verfahren nach Anspruch 5 oder 6, **dadurch gekennzeichnet, dass** das Informationsfenster
a) andere Anzeigenelemente, insbesondere virtuelle Rundinstrumente zur Geschwindigkeits- und/oder Drehzahlanzeige, zumindest zum Teil überblendet und/oder vor Abfahrt des Kraftfahrzeugs vollständig verdeckt; und/oder
b) nach Ausblenden der Zustandsanzeige des Vorratsdrucks und/oder nach Abfahrt des Kraftfahrzeugs und vor dem Ausblenden der Abfahrtskontrollanzeige verkleinert dargestellt wird.

7. Verfahren nach einem der vorhergehenden Ansprüche, **dadurch gekennzeichnet,**
a) **dass** die Abfahrtskontrollanzeige den Zustand weiterer Betriebsparameter anzeigt; und/oder
b) **dass** die Abfahrtskontrollanzeige durch einen Nutzer vorab personalisierbar ist, derart, dass eine Auswahl und Anzeigedauer von Betriebsparametern festlegbar sind, die von der Abfahrtskontrollanzeige angezeigt werden.

8. Verfahren nach einem der vorhergehenden Ansprüche, **dadurch gekennzeichnet, dass** eine Hinweissignal und/oder eine Benachrichtigung (17) ausgegeben wird, falls ein und/oder alle in der Abfahrtskontrollanzeige (10) angezeigten Betriebsparameter ihren zugeordneten Sollwert erreichen.

9. Verfahren nach einem der vorhergehenden Ansprüche, **dadurch gekennzeichnet, dass** das Einblenden der Abfahrtskontrollanzeige (10) vor Abfahrt beim Motorstart und vorzugsweise nach einem erfolgten Einstieg des Fahrers ins Kraftfahrzeug erfolgt.

10. System (1) zur Abfahrtskontrolle eines Kraftfahrzeugs, insbesondere eines Nutzfahrzeugs, umfassend
eine Anzeigevorrichtung mit einer Anzeigefläche;
eine Sensorvorrichtung (3), die ausgeführt ist, einen Zustand zumindest eines Vorratsdrucks eines Druckluftkreises, einer Öltemperatur und einer Kühlmitteltemperatur des Kraftfahrzeugs zur erfassen; und
eine Steuervorrichtung (2), die an die Anzeigevorrichtung und die Sensorvorrichtung (3) angekoppelt ist und mit der eine wiedergebende Anzeige auf der Anzeigefläche steuerbar ist, **dadurch gekennzeichnet, dass** die Steuervorrichtung ausgeführt ist, die Anzeigevorrichtung derart anzusteuern, dass auf der Anzeigefläche eine Abfahrtskontrollanzeige (10) vor Abfahrt des Kraftfahrzeugs eingeblendet wird, wobei die Abfahrtskontrollanzeige eine Zustandsanzeige (13, 14, 15) zumindest eines Vorratsdrucks eines Druckluftkreises, einer Öltemperatur und einer Kühlmitteltemperatur des Kraftfahrzeugs umfasst; und wobei die Zustandsanzeige des Vorratsdruck innerhalb der Abfahrtskontrollanzeige, nachdem der Vorratsdruck einen Vorratsdruck-Sollwert erreicht hat, ausgeblendet wird; und wobei die Abfahrtskontrollanzeige (10) nach Abfahrt des Kraftfahrzeugs, wenn zumindest die Öltemperatur einen Öltemperatur-Sollwert und die Kühlmitteltemperatur einen Kühlmitteltemperatur-Sollwert überschritten hat, ausgeblendet wird.

11. System (1) zur Abfahrtskontrolle nach Anspruch 10, **dadurch gekennzeichnet, dass** die Anzeigevorrichtung ein Kombiinstrument (4) und die Anzeigefläche ein Bildschirm (5) ist.

12. Nutzfahrzeug, umfassend ein System (1) nach Anspruch 10 oder 11.

## Claims

1. A method for controlling the driving off of a motor vehicle, in particular of a utility vehicle, comprising the steps:
Inserting a driving off control display (10) on the screen (5) of a combination instrument (4) of the motor vehicle before the motor vehicle drives off, wherein the driving off control display (10) comprises a status display (13, 14, 15) of the supply pressure of a compressed air circuit, an oil temperature and coolant temperature of the motor vehicle;
Removing the status display (13) of the supply pressure after the supply pressure has reached a supply pressure setpoint value; and
Removing the driving off control display (10) after the motor vehicle drives off if at least the oil temperature has exceeded an oil temperature setpoint value and the coolant temperature has exceeded a coolant temperature setpoint value.

2. The method according to Claim 1, **characterized by**
a) removing the status display (14) of the oil temperature within the driving off control display (10), in particular after the motor vehicle drives off, after the oil temperature has reached the oil temperature setpoint value; and
b) removing the status display (15) of the coolant temperature within the driving off control display (10), in particular after the motor vehicle drives off, after the coolant temperature has reached the coolant temperature setpoint value.

3. The method according to Claim 1 or 2, **characterized in that** the status display (13, 14, 15) of at least the supply temperature, the oil temperature and the coolant temperature of the motor vehicle alphanumerically and/or graphically displays the supply pressure setpoint value (13b), the oil temperature setpoint value (14b) and the coolant temperature setpoint value (15b) and in each case a current value (13a, 14a, 15a) of the supply pressure, of the oil temperature and of the coolant temperature.

4. The method according to one of the preceding claims, **characterized in that** the driving off control display (10) is displayed as an information window.

5. The method according to Claim 4, **characterized in that** the information window (10) comprises a status display (13, 14, 15) only of the supply pressure, of the oil temperature and of the coolant temperature of the motor vehicle.

6. The method according to Claim 5 or 6, **characterized in that** the information window
a) completely covers other display elements, in particular virtual round instruments for displaying the speed and/or rotational speed, at least partially superimposed and/or before the motor vehicle drives off; and/or
b) is displayed reduced in size after the removal of the status display of the supply pressure and/or after the driving off of the motor vehicle and before the removal of the driving off control display.

7. The method according to one of the preceding claims, **characterized**
a) **in that** the driving off control display displays the status of further operating parameters; and/or
b) **in that** the driving off control display can be personalized in advance by a user in such a way that a selection and display duration of operating parameters which are displayed by the driving off control display can be defined.

8. The method according to one of the preceding claims, **characterized in that** an information signal and/or a message (17) are/is output if an operating parameter and/or all the operating parameters displayed in the driving off control display (10) reach/reaches their/its assigned setpoint value.

9. The method according to one of the preceding claims, **characterized in that** insertion of the driving off control display (10) before the driving off takes place when the engine starts and preferably after the driver has entered the motor vehicle.

10. A system (1) for controlling the driving off of a motor vehicle, in particular a utility vehicle, comprising
a display device having a display surface;
a sensor device (3) which is designed to detect a status of at least one supply pressure of a compressed air circuit, an oil temperature and a coolant temperature of the motor vehicle; and
a control device (2) which is coupled to the display device and to the sensor device (3) and with which a representative display on the display surface can be controlled, **characterized in that** the control device is designed to actuate the display device in such a way that a driving off control display (10) is inserted on the display surface before the motor vehicle drives off, wherein the driving off control display comprises a status display (13, 14, 15) of at least one supply pressure of a compressed air circuit, an oil temperature and a coolant temperature of the motor vehicle; and wherein the status display of the supply pressure within the driving off control display is removed after the supply pressure has reached a supply pressure setpoint value; and wherein the driving off control display (10) is removed after the motor vehicle is driven off if at least the oil temperature has exceeded an oil temperature setpoint value, and the coolant temperature value has exceeded a coolant temperature setpoint value.

11. The system (1) for controlling the driving off according to Claim 10, **characterized in that** the display device is a combination instrument (4), and the display surface is a screen (5).

12. A utility vehicle comprising a system (1) according to Claim 10 or 11.

## Revendications

1. Procédé de contrôle de sortie d'un véhicule automobile, en particulier d'un véhicule utilitaire, comprenant les étapes suivantes :
apparition d'un écran de contrôle de sortie (10) sur un écran (5) d'un tableau de bord (4) du véhicule automobile avant la sortie du véhicule automobile, l'écran de contrôle de sortie (10) comprenant un écran d'état (13, 14, 15) d'une pression de réserve d'un circuit d'air comprimé,
d'une température d'huile et d'une température d'agent de refroidissement du véhicule automobile ;
disparition de l'écran d'état (13) de la pression de réserve une fois que la pression de réserve a atteint une valeur théorique de pression de réserve ; et
disparition de l'écran de contrôle de sortie (10) après la sortie du véhicule automobile si au moins la température de l'huile a dépassé une valeur théorique de température d'huile et si la température de l'agent de refroidissement a dépassé une température théorique d'agent de refroidissement.

2. Procédé selon la revendication 1, **caractérisé par**
a) une disparition de l'écran d'état (14) de la température de l'huile dans l'écran de contrôle de sortie (10), en particulier après la sortie du véhicule automobile, une fois que la température de l'huile a atteint la valeur théorique de la température d'huile ; et
b) une disparition de l'écran d'état (15) de la température de l'agent de refroidissement dans l'écran de contrôle de sortie (10), en particulier après la sortie du véhicule automobile, une fois que la température de l'agent de refroidissement a atteint la valeur théorique d'agent de refroidissement.

3. Procédé selon la revendication 1 ou 2, **caractérisé en ce que** l'écran d'état (13, 14, 15) au moins de la pression de réserve, de la température d'huile et de la température d'agent de refroidissement du véhicule automobile affiche en mode alphanumérique et/ou graphique la valeur théorique de pression de réserve (13b), la valeur théorique de température d'huile (14b) et la valeur théorique de température d'agent de refroidissement (15b) et respectivement une valeur réelle (13a, 14a, 15a) de la pression de réserve, de la température d'huile et de la température d'agent de refroidissement.

4. Procédé selon une des revendications précédentes, **caractérisé en ce que** l'écran de contrôle de sortie (10) se présente sous forme d'une fenêtre d'information.

5. Procédé selon la revendication 4, **caractérisé en ce que** la fenêtre d'information (10) comprend un écran d'état (13, 14, 15) simplement de la pression de réserve, de la température d'huile et de la température d'agent de refroidissement du véhicule automobile.

6. Procédé selon la revendication 5 ou 6, **caractérisé en ce que** la fenêtre d'information
a) écrase du moins en partie et/ou masque entièrement avant la sortie du véhicule automobile d'autres éléments d'affichage, en particulier des instruments ronds virtuels d'affichage de la vitesse et/ou du régime ; et/ou
b) apparaît rapetissée après la disparition de l'écran d'état de la pression de réserve et/ou après la sortie du véhicule automobile et avant la disparition de l'écran de contrôle de sortie.

7. Procédé selon une des revendications précédentes, **caractérisé en ce que**
a) l'écran de contrôle de sortie affiche l'état d'autres paramètres de fonctionnement ; et/ou
b) l'écran de contrôle de sortie est personnalisable préalablement par un utilisateur de manière à pouvoir établir une sélection et une durée d'affichage de paramètres de fonctionnement qui sont affichés par l'écran de contrôle de sortie.

8. Procédé selon une des revendications précédentes, **caractérisé en ce qu'**un signalement et/ou un message (17) est émis si un et/ou tous les paramètres de fonctionnement affichés dans l'écran de contrôle de sortie (10) atteignent leur valeur théorique assignée.

9. Procédé selon une des revendications précédentes, **caractérisé en ce que** l'apparition de l'écran de contrôle de sortie (10) a lieu avant la sortie lors du démarrage du moteur et de préférence une fois que le conducteur est monté effectivement dans le véhicule automobile.

10. Système (1) de contrôle de sortie d'un véhicule automobile, en particulier d'un véhicule utilitaire, comprenant
un dispositif d'affichage doté d'une surface d'affichage ;
un dispositif de détection (3) qui est conçu pour détecter un état d'au moins une pression de réserve d'un circuit d'air comprimé, une température d'huile et une température d'agent de refroidissement du véhicule automobile ; et
un dispositif de commande (2) qui est couplé au dispositif d'affichage et au dispositif de détection (3) et grâce auquel un affichage restitutif sur la surface d'affichage est contrôlable, **caractérisé en ce que** le dispositif de commande est conçu pour commander le dispositif d'affichage de manière à ce que, sur la surface d'affichage, un écran de contrôle de sortie (10) apparaisse avant la sortie du véhicule automobile, l'écran de contrôle de sortie comprenant un écran d'état (13, 14, 15) d'au moins une pression de réserve d'un circuit d'air comprimé, une température d'huile et une température d'agent de refroidissement du véhicule automobile ; et l'écran d'état de la pression de réserve dans l'écran de contrôle de sortie disparaissant une fois que la pression de réserve a atteint une valeur théorique de pression de réserve ; et l'écran de contrôle de sortie (10) disparaissant après la sortie du véhicule automobile si au moins la température de l'huile a dépassé une valeur théorique de température d'huile et la température d'agent de refroidissement a dépassé une valeur théorique de température d'agent de refroidissement.

11. Système (1) de contrôle de sortie selon la revendication 10, **caractérisé en ce que** le dispositif d'affichage est un tableau de bord (4) et la surface d'affichage un écran (5).

12. Véhicule utilitaire, comprenant un système (1) selon la revendication 10 ou 11.
